Europäisches Patentamt

European Patent Office

Office européen des brevets

(19)

(11) Numéro de publication : **0 033 679**

**B1**

(12) **FASCICULE DE BREVET EUROPÉEN**

(45) Date de publication du fascicule du brevet :
13.07.83

(51) Int. Cl.³ : **F 41 G 3/02, G 01 S 3/78**

(21) Numéro de dépôt : **81400070.9**

(22) Date de dépôt : **20.01.81**

(54) **Système de désignation d'objectif par laser.**

(30) Priorité : **01.02.80 FR 8002250**

(43) Date de publication de la demande :
**12.08.81 Bulletin 81/32**

(45) Mention de la délivrance du brevet :
**13.07.83 Bulletin 83/28**

(84) Etats contractants désignés :
**BE DE GB IT NL**

(56) Documents cités :
**GB A 1 372 348**
**GB A 1 459 386**
**US A 3 246 160**
**US A 3 752 587**
**US A 3 992 629**
**US A 4 038 547**
**US A 4 139 769**
**US A 4 154 532**
**US A 4 155 096**
**US A 4 160 272**

(73) Titulaire : **THOMSON-CSF**
**173, Boulevard Haussmann**
**F-75379 Paris Cedex 08 (FR)**

(72) Inventeur : **Daniel, Jean-Pierre**
**Thomson-CSF SCPI 173, bld Haussmann**
**F-75360 Paris Cedex 08 (FR)**

(74) Mandataire : **Trocellier, Roger et al**
**THOMSON-CSF SCPI 173, Bld Haussmann**
**F-75379 Paris Cedex 08 (FR)**

Jouve, 18, rue St-Denis, 75001 Paris, France

Système de désignation d'objectif par laser

La présente invention se rapporte à des systèmes de désignation d'objectif par laser et est relative plus particulièrement à un dispositif d'alignement des axes du laser et du détecteur d'image vidéo, dit senseur.

Dans ces systèmes une cible est désignée au moyen d'un faisceau lumineux directif procuré par un illuminateur laser. Le terme anglo-saxon « pod » parfois utilisé désigne également l'élément fuselé ou nacelle, logé extérieurement à l'avion porteur et qui comporte la majeure partie du système.

Les systèmes évolués sont dotés d'une poursuite automatique vidéo ; après désignation de l'objectif au senseur d'image lequel est associé au dispositif de poursuite, le pointage du faisceau laser sur la cible est maintenu automatiquement sans intervention du pilote et indépendamment des évolutions de l'avion. Monté dans une nacelle adaptable à de nombreux types d'appareils, le système peut ainsi être mis en œuvre à partir d'un avion monoplace et répondre aux besoins tactiques, notamment l'attaque directe à basse altitude et à grande vitesse. Le système permet le guidage de roquettes ou de missiles tels des autodirecteurs laser.

Suivant un mode connu de réalisation, un tel système comporte un télémètre-illuminateur laser à impulsions codées avec stabilisation du faisceau qui reste pointé sur la cible par une caméra de télévision avec poursuite automatique. Un dispositif gyroscopique placé à l'avant de la nacelle stabilise la ligne de visée commune à la caméra de télévision et à l'émission laser et permet de l'orienter. L'image du paysage est réfléchie par un miroir stabilisé vers la caméra de télévision à travers un cheminement optique à focale variable. L'image de télévision est visualisée dans le cockpit ; les signaux vidéo sont traités par les écartomètres de la poursuite automatique. L'illumination laser est réfléchie par un miroir dichroïque placé dans le cheminement optique pour qu'elle sorte parallèle à la ligne de visée optique correspondant à la prise d'image du paysage par la caméra de télévision. Le miroir stabilisé sert à découpler la ligne de visée des vibrations de structure et permet de l'orienter ; la stabilisation est produite par une plate-forme gyroscopique lacet/tangage, l'orientation est réalisée par la rotation en roulis de la partie avant conjuguée avec des mouvements en site et en gisement du miroir par un dispositif à cardans. Le système de poursuite télévision fonctionne sur deux modes, un premier mode servant à stabiliser l'image sur la zone d'objectif et à la désigner, et un deuxième mode pour fonctionner en poursuite automatique. Le premier mode correspond à la phase d'acquisition de cible ou désignation, le second mode peut être produit en utilisant la technique de corrélation de zone ou encore, selon un procédé d'analyse de contraste vidéo.

L'un des problèmes à résoudre pour ces systèmes est l'alignement précis durant toute la phase de désignation, de l'axe d'émission laser avec celui du champ de visée du senseur correspondant au centre de l'image vidéo.

Une technique d'alignement automatique utilisant une source laser est décrite dans le brevet américain US nº 4 155 096, procédant par rétro-réflexion du rayonnement laser. Cette technique présente divers inconvénients énumérés ci-après :

— Le séparateur dichroïque laisse passer une fraction de l'énergie laser rétro-réfléchie vers le senseur d'image dont elle impressionne la surface photosensible. Le séparateur et les éléments optiques disposés selon la voie optique de réception aboutissant au senseur, sont normalement destinés à transmettre de l'énergie lumineuse de longueur d'onde différente de celle du laser et leur transmittance à la longueur d'onde de la source laser est couramment soumise à une grande dispersion. Il est par suite nécessaire de prévoir pour ces éléments des caractéristiques définies d'adaptation à la longueur d'onde du laser. La même remarque s'applique au senseur d'image, caméra TV, FLIR ou autre, qui devra présenter des caractéristiques de sensibilité à la longueur d'onde du laser.

— Par ailleurs, le laser est généralement du type à impulsions qui sont délivrées à une cadence inférieure à la fréquence de balayage du senseur. Il en résulte que les circuits du système normalement cadencés à la fréquence de balayage doivent pouvoir fonctionner à partir d'une info vidéo à la cadence laser. Ceci est effectif pour des circuits automatiques de luminosité ou de gain de la chaîne vidéo, et pour l'écartomètre.

— Un autre problème survient dans le cas où la source laser est couplée avec un récepteur laser pour effectuer une télémétrie. L'énergie laser rétroréfléchie passe pour l'essentiel après le séparateur dichroïque par la voie laser, d'où un risque réel pour le récepteur laser et la nécessité de prévoir une protection de celui-ci pendant l'alignement.

— Une autre difficulté peut résulter des contraintes de sécurité laser. Ainsi il arrive que l'alignement ne puisse être effectué à temps avant la phase de désignation d'objectif du fait que le laser est inutilisable pendant une bonne partie de la mission pour respecter les règles de sécurité.

Le but de l'invention est de réaliser un dispositif d'alignement précis des axes laser-senseur, et qui notamment ne présente pas les inconvénients précités. Ceci résulte plus particulièrement de ce que la technique d'alignement mise en œuvre n'utilise pas la source laser ; elle est ainsi totalement exempte des problèmes évoqués de longueur d'onde lumineuse, de cadence laser, de retour d'énergie laser ainsi que de sécurité laser.

Suivant une caractéristique de l'invention, le dispositif d'alignement utilise : une source lumineuse prévue à cet effet et dont le rayonnement est focalisé sur le senseur ; l'entraînement en rotation du senseur pour déplacer le point image de cette source autour du point invariant de l'image correspondant à l'axe de rotation, cet entraînement étant produit pour correspondre à différentes positions successives prédéterminées ; la mesure des écarts en X et Y du point image pour ces différentes positions, et la déduction par le calcul des écarts du point invariant relativement au centre de l'image ; et les modifications correspondantes des signaux de balayage du senseur en X et Y pour faire coïncider le centre de l'image avec l'axe de rotation, l'axe laser étant par ailleurs aligné avec l'axe de rotation.

Les particularités et avantages de la présente invention apparaîtront au cours de la description qui suit donnée à titre d'exemple, à l'aide des figures annexées qui représentent :

Figure 1, un diagramme général des moyens principaux d'un système de désignation d'objectif par laser aménagé conformément à la présente invention ;

Figure 2, un schéma simplifié illustrant le problème d'alignement à résoudre et le procédé utilisé ;

Figure 3, la visualisation de l'image vidéo lors de l'alignement et en présence d'un écart à annuler ;

Figure 4, la même vue que la Fig. 3 après action du dispositif d'alignement ; et

Figure 5, un diagramme fonctionnel d'un mode de réalisation possible du dispositif d'alignement selon l'invention.

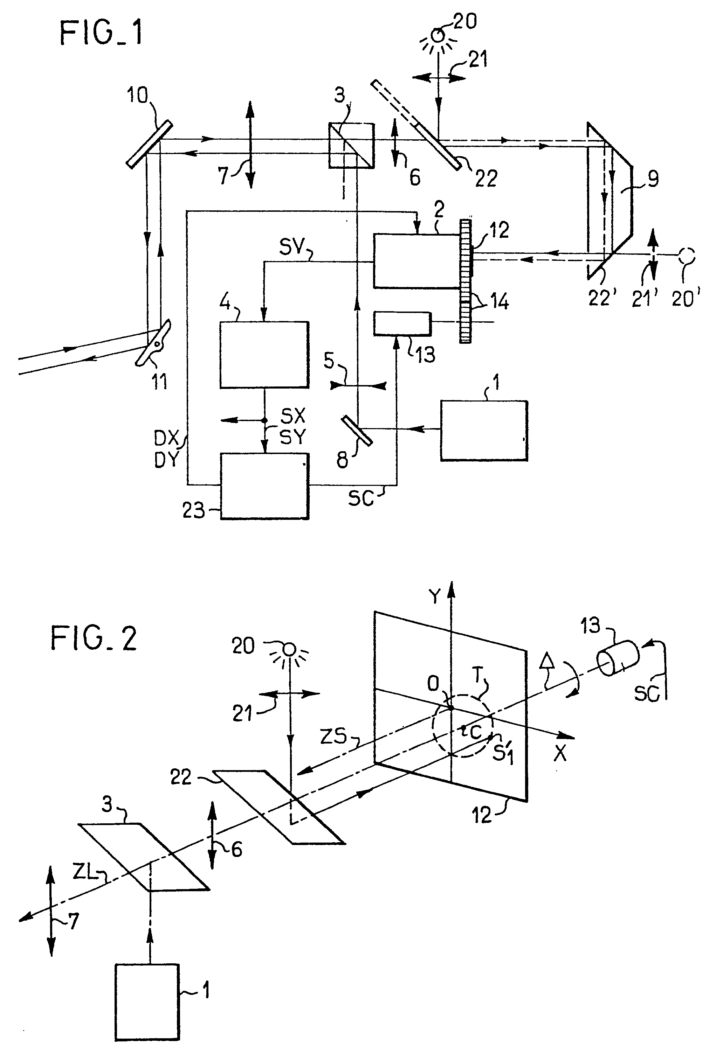

La Fig. 1 représente de manière simplifiée un arrangement typique d'un système de désignation d'objectif par laser avec un laser illuminateur 1, un senseur d'images vidéo 2 tel une caméra de télévision, un séparateur dichroïque 3 pour réfléchir le rayonnement laser et transmettre au senseur le rayonnement provenant du champ observé, et un circuit de traitement vidéo 4, dit traqueur ou écartomètre, faisant partie de la chaîne de poursuite vidéo. A ces éléments principaux, il y a lieu de rajouter les éléments optiques insérés sur les voies d'émission et de réception et pouvant comporter comme représenté des lentilles 5, 6, 7 et des miroirs ou prismes de renvoi 8, 9, 10 et 11. L'ensemble 6-7 constitue l'optique de focalisation du rayonnement reçu de l'extérieur sur la surface photosensible 12 du senseur 2. Le miroir 11 constitue le miroir stabilisé et orientable pour faire varier la direction commune d'illumination et de visée du système, les moyens de stabilisation et d'orientation ne sont pas figurés par souci de simplification. En outre, il est considéré que le senseur est mobile en rotation de manière à éliminer la rotation d'image causée par le roulis ; les moyens d'entraînement en rotation sont symbolisés par un moteur 13 et un jeu de pignons 14.

L'aménagement de ce système pour constituer le dispositif d'alignement comporte une source lumineuse 20 de petites dimensions, telle une diode électroluminescente, dont le rayonnement est compatible avec la bande de longueur d'onde de réception du senseur, une optique 21 pour focaliser ce rayonnement sur la surface photosensible 12 ou plan image et un moyen optique pour la réception de ce rayonnement dans le champ de visée du senseur. Ce moyen optique peut consister en un miroir de renvoi 22 escamotable et qui se trouve interposé sur le trajet de réception lors de l'alignement. Le bloc 23 symbolise les moyens électroniques d'alignement qui permettent d'une part, de commander par un signal SC le moteur 13 et positionner angulairement le senseur, d'autre part, de calculer les signaux de correction DX, DY destinés au senseur pour modifier le positionnement du centre de l'image balayée correspondant à l'axe du champ de visée. Les signaux de correction DX, DY sont élaborés à partir des données d'écart SX, SY de la source 20 fournies par l'écartomètre 4.

La Fig. 2 montre plus clairement l'alignement à effectuer entre l'axe laser ZL et l'axe senseur ZS. L'axe ZL est celui du faisceau laser après réflexion sur le séparateur dichroïque ; cette direction aboutit au point C du plan image 12. L'axe ZS du champ de visée du senseur présente la même direction et correspond au point O centre de l'image balayée sur la surface 12. L'alignement consiste à faire coïncider les deux points C et O. L'axe Δ est celui de rotation du senseur, sa direction comme celle des axes ZL et ZS est orthogonale au plan image 12. Il est entendu que l'axe laser ZL est préalablement aligné avec l'axe Δ de rotation selon une procédure de réglage routinière, mécanique ou opto-mécanique, répondant à des techniques connues de savoir faire ; cet alignement est stable et n'exige pas d'être renouvelé à chaque mission. En conséquence il est convenu, aux erreurs de réglage près, que les axes ZL et Δ coïncident et passent par le même point C du plan image. L'alignement restant à effectuer consiste donc à ramener en C le centre O de balayage, c'est-à-dire à annuler les écarts CX et CY du point C par rapport aux axes X et Y de référence de mesure des écarts passant par O. Le rayonnement de la source 20 est focalisé en un point S'1 de la surface photosensible 12. En faisant tourner le senseur autour de son axe de rotation Δ, la tache lumineuse S'1 image de la source 20 va décrire un cercle T centré sur le point C constituant le point invariant de l'image. Le rayon du cercle est fonction du positionnement de la source 20. Le dispositif d'alignement permet, à l'aide des circuits 4 et 23, de constituer une boucle d'asservissement automatique entre l'axe de rotation Δ et les circuits de balayage du senseur dans laquelle, les écarts SX, SY obtenus à partir du signal vidéo SV sont traités pour détecter et mesurer les écarts CX, CY entre le centre O du champ de visée du senseur et le point invariant de l'image C, et pour convertir ces écarts en signaux DX, DY directement utilisables pour ajuster le balayage du senseur et faire coïncider le centre O avec le point C.

L'asservissement permet ainsi d'aligner avec une grande précision l'axe de visée ZS du senseur avec l'axe de rotation Δ et donc avec l'axe laser ZL.

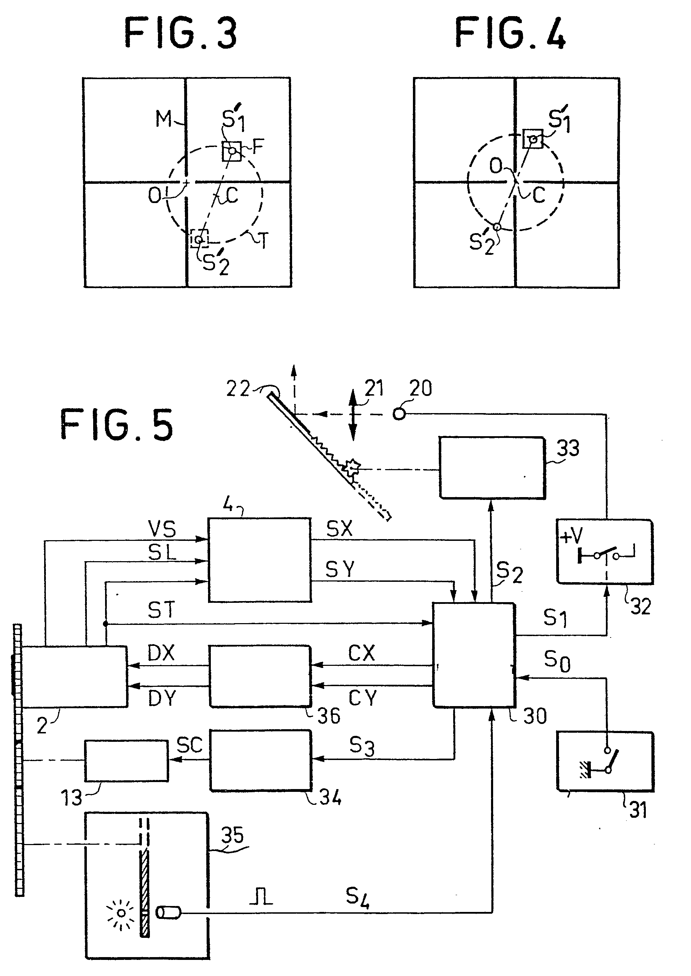

Pour calculer les écarts CX, CY du point invariant C par rapport au centre O du balayage, il est nécessaire de connaître plusieurs points, tel que S'1, du cercle T sur lequel S' se déplace lors de la rotation, de manière à pouvoir définir le cercle T et corrélativement son centre C. En conséquence, la commande SC de l'entraînement en rotation est produite pour obtenir plusieurs positions successives différentes déterminées de S'1 sur le plan image. Le mode d'exploitation le plus simple, et préféré car il donne lieu à des calculs simples, consiste à produire une unique rotation de 180° comme représenté sur la Fig. 3. Le point image de la source 20 occupe ainsi la position initiale S'1 puis, après rotation, la position S'2 diamétralement opposée. Les coordonnées du centre C sont alors données par la demi-somme x1 + x2/2 et y1 + y2/2 des coordonnées des points S1 (x1, y1) et S2(x2, y2) délivrées par l'écartomètre 4. La Fig. 4 représente la même configuration après action de l'asservissement qui annule les écarts entre O et C. La fenêtre électronique F sert à désigner de manière connue la tache lumineuse dont on veut mesurer les écarts en X et en Y, ces écarts correspondent au centre de la fenêtre ; une mire électronique M permet de définir le centre de l'image et de représenter les axes de référence de mesure des écarts.

La Fig. 5 illustre sous forme d'un diagramme fonctionnel un exemple de réalisation du dispositif d'alignement et notamment des moyens électroniques d'alignement 23 de la Fig. 1. Un calculateur spécialisé 30, tel un microcalculateur ou microprocesseur par exemple, élabore les ordres et effectue les traitements durant une séquence de temps correspondant à l'opération d'alignement. Le bloc 31 symbolise des organes annexes de commande permettant à l'opérateur de choisir les divers modes de fonctionnement envisagés pour le système ; il pourra comporter un tableau de commande muni de boutons poussoirs pour sélectionner les différents modes, la fonction alignement pouvant être produite par exemple par action sur une commande par bouton poussoir prévu à cet effet, ou, en formant une combinaison particulière de plusieurs de ces commandes. Quelle que soit la solution prévue, on considère que la sortie SO des circuits annexes de commande de mode 31 présente, en particulier, un état qui correspond à la commande de la phase d'alignement ; pour cet état, le signal SO déclenche un processus correspondant dans le calculateur 30. Ce processus comporte l'élaboration de divers ordres de commande, un premier ordre de commande S1 pour alimenter la source lumineuse 20 ; le signal S1 peut commander par exemple un circuit d'alimentation 32 formé d'un interrupteur dont la fermeture connecte une alimentation continue +V à la source ; un deuxième ordre de commande S2 est destiné à un circuit d'entraînement 33 pour déplacer le miroir 22 de sa position de repos (en pointillé) à celle qu'il doit présenter lors de l'alignement ; enfin un troisième ordre S3 est transmis à un circuit 34 d'alimentation du moteur 13 pour l'entraînement en rotation de la caméra 2. Le mouvement est arrêté lorsque la caméra est dans une première position angulaire déterminée au moyen d'un dispositif capteur 35 qui fournit à ce moment un signal S4 au calculateur lequel déclenche en retour l'arrêt du moteur 13 par modification d'état du signal S3. Le capteur 35 peut être réalisé de nombreuses façons, l'une d'elles est symbolisée par un disque tournant en synchronisme avec la caméra et porteur d'une piste optique, de part et d'autre de la piste extérieurement au disque se trouvent une diode électroluminescente et une cellule photoélectrique ; la piste peut simplement consister en deux fentes diamétralement opposées.

Le point image S1 ayant été désigné par l'opérateur au moyen de la fenêtre F, le circuit écartomètre 4 délivre, à partir du signal vidéo SV et des signaux de synchronisation ligne SL et trame ST, les signaux d'écarts SX, SY qui traduisent les coordonnées x1, y1 de ce point. Ces valeurs d'écarts sont stockées dans une mémoire du calculateur 30 qui commande ensuite à nouveau l'entraînement en rotation de la caméra jusqu'à la deuxième position pour recueillir les coordonnées x2 et y2 du point S'2 diamétralement opposé à S'1. Le calculateur 30 effectue alors le calcul des données d'écart CX, CY du centre C à partir des valeurs stockées x1, x2, y1, y2 et il transmet les données à un circuit de conversion 36 qui produit les signaux de correction analogiques appropriés DX et DY destinés aux circuits de déflexion du tube de prise de vues dans la caméra. Les signaux DX et DY y sont mélangés avec les signaux de déflexion pour produire les corrections désirées et déplacer le centre O du balayage en C. Le processus d'alignement est alors terminé et peut être repris une seconde fois pour affiner le réglage selon l'organigramme qui vient d'être décrit.

Les circuits 30 à 36, sont réalisables aisément comme indiqués ou selon diverses techniques connues. A noter que le calculateur 30 peut être conçu sous forme d'un simple microprocesseur ou encore, faire partie du calculateur normalement inséré dans la chaîne de poursuite automatique vidéo du système de désignation d'objectif.

Le positionnement de la source 20 et des éléments 21 et 22 associés doit être fait de manière à amener le point image S'1 assez près du centre C, par exemple en sorte que le rayon du cercle T n'excède pas 10 à 20 % du champ de visée de la caméra, afin de rester assez près du centre de l'image pour bénéficier de la zone linéaire de traitement de l'écartomètre et accroître la précision du réglage. Sur les Figs. 2, 3 et 4 les écarts entre O et C et le rayon du cercle ont été volontairement exagérés pour clarifier la représentation. En fait le positionnement des éléments 20 à 22 n'exige qu'une précision assez moyenne. Dans le cas particulier où le point image de la source correspondrait avec le point invariant C de l'image, c'est-à-dire le cas d'un cercle de rayon nul, le fonctionnement reste inchangé, l'écartomètre 4 délivrera à chaque fois directement des écarts correspondant à CX et CY.

Parmi les variantes possibles de réalisation, il y a lieu de noter la configuration en pointillé de la figure 1 avec la source 20′, l'optique 21′ et le miroir 22′. Ce dernier est constitué par l'un des miroirs de la voie réceptrice, par exemple le dernier comme représenté, ce miroir étant rendu semi-réfléchissant pour laisser passer par transparence le rayonnement de la source 20′ durant l'alignement. Ce montage permet d'éviter la structure à miroir 22 rétractable ou escamotable ; cependant, pour éviter de recevoir le rayonnement de la scène extérieure durant l'alignement, un autre aménagement doit être apporté à la structure. Une solution consiste à orienter le miroir 11 en sorte que la direction de visée ne soit plus dirigée vers l'extérieur, à travers un dôme transparent non figuré, mais vers une zone sombre interne à la nacelle.

La technique d'alignement décrite peut être utilisée aussi souvent que nécessaire, en particulier à chaque mission opérationnelle, automatiquement ou sur commande de l'exploitant. Les éléments opérationnels restent utilisés dans leur fonctionnement normal, les éléments spécifiques rajoutés pour l'alignement sont des éléments usuels, sans qualité exceptionnelle de fabrication ou de montage.

Outre les avantages déjà évoqués du dispositif d'alignement selon l'invention, il peut encore être remarqué que, si un décalage résiduel δ existe entre l'axe laser ZL et l'axe de rotation Δ après le réglage mécanique préalable, ce décalage reste constant au cours de la rotation alors qu'il variera entre 0 et 2 δ dans un système du type cité dans le préambule.

## Revendications

1. Système de désignation d'objectif par laser, comportant un illuminateur laser (1), un senseur d'images vidéo (2), des moyens de poursuite vidéo (4) avec un écartomètre élaborant à partir du signal vidéo les signaux d'écart en X et Y de l'objectif désigné, des éléments optiques (8-3-10-11-9) définissant les trajets respectifs d'émission et de réception, un arrangement de certains de ces éléments optiques (11) pour orienter le faisceau laser et pour recevoir selon la même direction le rayonnement de la scène extérieure comprise dans le champ de visée du senseur, et un dispositif d'alignement pour faire coïncider l'axe du faisceau laser avec celui du champ de visée aboutissant au centre de l'image balayée sur le senseur (2), ce dispositif comportant des moyens (22) d'interruption de la réception du rayonnement de scène vers le senseur durant la phase d'alignement, et des moyens électroniques (23) pour traiter les signaux d'écart et élaborer des signaux de correction de balayage destinés au senseur pour déplacer le centre de l'image, le système étant caractérisé en ce qu'un dispositif d'entraînement en rotation (13-14) du senseur (2) est prévu et que le dispositif d'alignement comporte, une source lumineuse ponctuelle (20), une optique (21) de focalisation du rayonnement de la source sur le senseur par l'intermédiaire d'un miroir (22, 22′) interposé sur le trajet de réception, les moyens électroniques (23) comportant des moyens de commande (34, 35) du dispositif d'entraînement en rotation (13-14) pour produire une pluralité de positionnements angulaires successifs prédéterminés, des moyens de stockage (30) des informations successives d'écart du point image (S1, S2) de la source et des moyens de calcul à partir des informations stockées des écarts (CX, CY) du point invariant (C) de l'image correspondant à l'axe de rotation (Δ) du senseur, ces écarts définissant les signaux de correction de balayage (DX, DY) à appliquer.

2. Système selon la revendication 1, caractérisé en ce que le dispositif d'entraînement en rotation est commandé en sorte de produire des positionnements successifs à 180° l'un de l'autre et qu'il comporte dans ce but un capteur de position (35).

3. Système selon la revendication 1 ou 2, caractérisé en ce que les moyens électroniques (23) comportent un calculateur du type microprocesseur (30) qui groupe les moyens de stockage et de calcul et qui élabore les ordres de commande (S3) du dispositif d'entraînement, ainsi qu'un ordre de commande d'alimentation (S1) de la source.

4. Système selon la revendication 3, caractérisé en ce que les moyens d'interruption de la réception et le miroir interposé sur le trajet de réception sont constitués par un miroir (22) escamotable qui réfléchit le rayonnement de la source vers le senseur durant l'alignement, le positionnement de ce miroir étant commandé par un dispositif associé (33) sur réception d'un ordre de commande (S2) du calculateur.

5. Système selon l'ensemble des revendications 2 à 4, caractérisé en ce que des moyens de commande de mode de fonctionnement annexes (31) produisent un ordre (S0) de déclenchement de la phase d'alignement destiné au calculateur (30) lequel reçoit en outre, de l'écartomètre (4) les signaux d'écart du point image de la source lumineuse, du capteur (35) l'information (S4) de positionnement angulaire du senseur, ledit calculateur délivrant, l'ordre d'alimentation (S1) de la source à un circuit d'alimentation continue (32), l'ordre de positionnement (S2) du miroir escamotable (22) au dispositif de commande associé (33), l'ordre d'entraînement en rotation (S3) du senseur au dispositif d'entraînement correspondant (34-13-14), et les valeurs calculées d'écart (CX, CY) du point invariant à un circuit de conversion (36) qui délivre les valeurs analogiques (DX, DY) de correction de balayage du senseur.

6. Système selon l'une quelconque des revendications 1 à 3, caractérisé en ce qu'un des éléments optique du trajet de réception, en l'occurrence un miroir de renvoi (22′) est rendu semi-transparent pour constituer le miroir interposé assurant, par transmission, la réception du rayonnement de source durant l'alignement, les moyens d'interception du rayonnement extérieur étant produits par un déplacement angulaire des éléments optiques d'orientation (11).

## Claims

1. Laser object-designation system comprising a laser illumination source (1), a video image sensor (2), video tracking means (4) comprising a deviation meter producing the X and Y deviation signals of the designated object from the video signal, optical elements (8, 3, 10, 11, 9) defining the emission and reception paths, respectively, an arrangement of certain of these optical elements (11) for directing the laser beam and for receiving, out of the same direction, the radiation of the external scene comprised within the field of vision of the sensor, and an alignment device for making the axis of the laser beam coincident with that of the field of vision at the center of the image scanned on the sensor (2), this device comprising means (22) for interrupting the reception of the scene radiation towards the sensor during the alignment phase, and electronic means (23) for processing the deviation signals and for generating sensor scanning correction signals for shifting the image center, the system being characterized in that a rotational driving device (13-14) for driving the sensor (2) is provided and in that the alignment device comprises an illumination point source (20), a focusing optic (21) for focusing the radiation of the source onto the sensor using a mirror (22, 22') interposed on the reception path, the electronic means (23) comprising control means (34, 35) for controlling the rotational driving device (13-14) for producing a plurality of successive predetermined angular positions, means (30) for storing successive deviation information of the image point (S1, S2) of the source and calculation means for calculating the deviations (CX, CY) of the invariant point (C) of the image corresponding to the rotational axis (Δ) of the sensor from the stored information, these deviations defining the scanning correction signals (DX, DY) to be applied.

2. System in accordance with claim 1, characterized in that the rotational driving system is controlled in a manner to produce successive positions at 180° from each other, and that it comprises a position detector (35) to this end.

3. System in accordance with claim 1 or 2, characterized in that the electronic means (23) comprise a calculator of microprocessor type (30) including the storage and calculation means and generating control commands (S3) of the driving device as well as a supply control command (S1) for the supply of the source.

4. System in accordance with claim 3, characterized in that the reception interruption means and the mirror interposed on the reception path are formed by a removable mirror (22) reflecting the radiation from the source towards the sensor during alignment, the positional adjustment of this mirror being controlled by an associated device (33) upon reception of a control command (S2) from the calculator.

5. System in accordance with each of claims 2 to 4, characterized in that associated operation mode control means (31) produce a triggering command (SO) for triggering the alignment phase to be applied to the calculator (30) which further receives from the deviation meter (4) the deviation signals of the image point of the light source and the angular position information (S4) of the sensor from the detector (35), said calculator delivering the supply command (S1) of the source to a continuous supply circuit (32), the positional adjustment commands (S2) of the removable mirror (22) to the associated control device (33), the rotational driving command (S3) of the sensor to the corresponding driving system (34-13-14), and the computed deviation values (CX, CY) of the invariant point to a conversion circuit (36) delivering the analog scanning correction values (DX, DY) of the sensor.

6. System in accordance with any of claims 1 to 3, characterized in that one of the optical elements of the reception path, i. e. a deflection mirror (22'), is semi-transparent for forming the interposed mirror assuring, by transmission, the reception of the source radiation during the alignment, the interception means for intercepting the external radiation being formed by an angular displacement of the optic direction means (11).

## Ansprüche

1. Laser-Objekt-Bezeichnungssystem mit einer Laser-Beleuchtungsquelle (1), einem Videobildfühler (2), Video-Verfolgungsmitteln (4) mit einem Ablagemeßgerät, welches aus dem Videosignal die X- und Y-Ablagesignale des bezeichneten Objektes ableitet, mit optischen Elementen (8, 3, 10, 11, 9), die Empfangs- und Sendewege bilden, einer Anordnung aus bestimmten dieser optischen Elemente (11) zum Richten des Laserstrahls und zum Empfang der Strahlung aus der Außenszene innerhalb des Sichtfeldes des Fühlers aus derselben Richtung, und mit einer Ausrichtvorrichtung zum Zusammenführen der Achse des Laserstrahls mit derjenigen des Sichtfeldes in der Mitte des auf dem Fühler (2) abgetasteten Bildes, wobei diese Vorrichtung Mittel (22) zum Unterbrechen des Empfangs der Strahlung aus der Szene zu dem Fühler während der Ausrichtphase und elektronische Mittel (23) zur Verarbeitung der Ablagesignale und Erzeugung von Ablenkkorrektursignalen umfaßt, die für den Fühler bestimmt sind, um die Mitte des Bildes zu verschieben, wobei das System dadurch gekennzeichnet ist, daß eine Drehantriebsvorrichtung (13-14) des Fühlers (2) vorgesehen ist und daß die Ausrichtvorrichtung umfaßt : eine Punktlichtquelle (20), eine Fokussieroptik (21) zum Fokussieren der Strahlung der Quelle auf dem Fühler über einen Spiegel (22, 22'), der auf dem Empfangsweg angeordnet ist ; wobei die elektronischen Mittel (23) umfassen : Steuermittel (34, 35) zum Steuern der Drehantriebsvorrichtung (13-14) zur Erzeugung einer Mehrzahl von aufeinanderfolgenden vorbestimmten Winkelpositionen, Speichermittel (30) zum Speichern der aufeinanderfolgenden Ablageinformationen des Bildpunktes (S1, S2) der Quelle sowie Rechenmittel zum Berechnen der Ablagewerte (CX, CY) des invarianten Punktes (C) des Bildes, welcher der Rotationsachse (Δ) des Fühlers entspricht, aus den gespeicherten Informationen, wobei diese Ablagewerte die anzulegenden Ablenkkorrektursignale (DX, DY) definieren.

2. System nach Anspruch 1, dadurch gekennzeichnet, daß die Drehantriebsvorrichtung so gesteuert ist, daß aufeinanderfolgende, 180° voneinander entfernte Stellungen erzeugt werden, und daß sie zu diesem Zweck einen Stellungsmelder (35) umfaßt.

3. System nach Anspruch 1 oder 2, dadurch gekennzeichnet, daß die elektronischen Mittel (23) einen Rechner (30) vom Mikroprozessortyp umfassen, der die Speicher- und Rechenmittel einschließt und die Steuerbefehle (S3) der Antriebsvorrichtung sowie einen Steuerbefehl zur Versorgung (S1) der Quelle erzeugt.

4. System nach Anspruch 3, dadurch gekennzeichnet, daß die Mittel zur Unterbrechung des Empfangs und der auf dem Empfangsweg angeordnete Spiegel gebildet sind aus einem entfernbaren Spiegel (22), der die Strahlung der Quelle während der Ausrichtung zu dem Fühler reflektiert, wobei die Positionierung dieses Spiegels durch eine zugeordnete Vorrichtung (33) beim Empfang eines Steuerbefehls (S2) aus dem Rechner gesteuert wird.

5. System nach der Gesamtheit der Ansprüche 1 bis 4, dadurch gekennzeichnet, daß beigeordnete Betriebsart-Steuermittel (31) einen Auslösebefehl (S0) zum Auslösen der Ausrichtphase erzeugen, welcher für den Rechner (30) bestimmt ist, der ferner aus dem Ablagemeßgerät (4) die Ablagesignale des Bildpunktes der Lichtquelle und aus dem Stellungsmelder (35) die Winkelstellungs-Positionsinformation (S4) des Fühlers empfängt, wobei der Rechner den Versorgungsbefehl (S1) zur Versorgung der Quelle an eine kontinuierliche Versorgungsschaltung (32), den Positionierungsbefehl (S2) zum Positionieren des entfernbaren Spiegels (22) an die zugeordnete Steuervorrichtung (33), den Drehantriebsbefehl (S3) für den Drehantrieb des Fühlers an die entsprechende Antriebsvorrichtung (34-13-14) und die berechneten Ablagewerte (CX, CY) des invarianten Punktes an eine Umsetzschaltung (36) abgibt, welche die analogen Ablenkkorrekturwerte (DX, DY) des Fühlers abgibt.

6. System nach einem der Ansprüche 1 bis 3, dadurch gekennzeichnet, daß eines der optischen Elemente des Empfangsweges, nämlich ein Umlenkspiegel (22'), halbdurchlässig ausgebildet ist, um den eingefügten Spiegel zu bilden, der durch Transmission den Empfang der Strahlung aus der Quelle während der Ausrichtung gewährleistet, wobei die Mittel zum Auffangen der externen Strahlung durch eine Winkelverschiebung der optischen Orientierungselemente (11) gebildet sind.

0 033 679

FIG_1

FIG_2

# FIG. 3

# FIG. 4

# FIG. 5